# EUROPÄISCHE PATENTSCHRIFT

(11) **EP 3 899 266 B1**
(45) Veröffentlichungstag und Bekanntmachung des Hinweises auf die Patenterteilung: **22.02.2023**
(21) Anmeldenummer: 19831593.9
(22) Anmeldetag: 19.12.2019
(51) Int. Cl.: F03D 13/10, F16F 7/10, F03D 80/00

(54) **IMPULS-SCHWINGUNGSTILGER FÜR HOHE SCHLANKE STRUKTUREN**
IMPULSE TUNED MASS DAMPER FOR TALL, SLIM STRUCTURES
AMORTISSEUR DE VIBRATIONS D'IMPULSIONS POUR STRUCTURES ÉLANCÉES ÉLEVÉES

(30) Priorität: 21.12.2018 EP 18000995
(43) Veröffentlichungstag der Anmeldung: 27.10.2021
(73) Patentinhaber: ESM Energie- und Schwingungstechnik Mitsch GmbH, 64646 Heppenheim (DE)
(72) Erfinder: SCHNEIDER, Lukas, 64646 Heppenheim (DE)
(74) Vertreter: Benz, Jürgen
(86) Internationale Anmeldenummer: PCT/EP2019/000348
(87) Internationale Veröffentlichungsnummer: WO 2020/126070

(56) Entgegenhaltungen:
- EP-A2- 2 378 118
- WO-A1-2017/144167
- WO-A1-2019/029839
- WO-A2-2011/088965

## Beschreibung

Die Erfindung betrifft eine Impulsdämpfer-Vorrichtung, die speziell vorgesehen ist für die Errichtung oder den Rückbau von hohen schlanken Bauwerken, insbesondere Türmen und vorzugsweise von Türmen von Windkraftanlage, um insbesondere unerwünschte Schwingungszustände der Anlage, vorzugsweise in einem Frequenzbereich unter 10, vorzugsweise unter 5 Hz, zu minimieren bzw. zu beseitigen, die erfahrungsgemäß besonders im unvollständigen bzw. unfertigen Zustand auftreten und zu starken und nicht voraussehbaren Erhöhungen der durch Wind, Wellen oder Erdstößen initiierten Schwingungsamplituden des Schwingungssystems führen können. Die erfindungsgemäßen Impuls-Schwingungstilger sind vorzugsweise für den temporären mobilen Einsatz während der Errichtungsphase oder der Demontage des Bauwerks vorgesehen, sind aber prinzipiell auch für dauerhaften Einsatz geeignet.

Bei der Errichtung von Windkraftanlagen wird zuerst der Turm in der Regel segmentweise errichtet. Anschließend wird die Gondel mit Rotor montiert. Die Situation ohne Gondel (Turmstummel alleine) ist bezüglich Resonanzanregung kritisch zu sehen, da in diesem Zustand größere Schwingamplituden entstehen können, als dies mit Gondel der Fall ist. Der Tilger wird hierbei beispielsweise auf das Ende des obersten Turmsegmentes gesetzt und dort verschraubt. Dieser Vorgang wird solange wiederholt, bis der Turm komplett errichtet ist und die Gondel aufgesetzt werden kann. Es ist auch möglich den Tilger temporär auf die bereits angebrachte Gondel zu montieren, um so die Montage der Rotorblätter schwingungstechnisch zu erleichtern.

Die Eigenfrequenz der Anlage änderts sich hierbei mit Montage- bzw. Demontagefortschritt und die Tilgerfrequenz muss somit entsprechend anpassbar sein.

Schwingungstilger des Standes der Technik bestehen in der Regel aus folgenden drei Einheiten: Tilgermasse, Dämpfereinheit und Federeinheit.

In dem Gesamtsystem liegen diese drei Positionen üblicherweise als getrennte Einheiten vor. Die Federeinheit dient hierbei zur Anpassung der Tilgerfrequenz an die gegebenen Randbedingungen vor Ort. Die Dämpfereinheit wird benötigt um eine breite Tilgerwirkung zu generieren. Die Federeinheit besteht in der Regel aus Stahl-Federn oder aus elastischen Elementen.

Anschlag-, bzw. Impulsdämpfer sind im Stand der Technik prinzipiell bekannt. Bei Schwingungen durch das Hauptsystem, beispielsweise eine Windkraftanlage, schlägt die für die Dämpfung vorgesehenen Masse an eine Wandung der Anlage, die zumeist aus Beton, Stahl oder Hybridwerkstoffen bestehen. Dabei tritt ein Impuls auf, der in seiner Richtung der Bewegungsrichtung der Anlage entgegengesetzt ist. Dadurch wird das Hauptsystem fortschreitend beruhigt.

Eine Windkraftanlage mit einem Impulsdämpfer zur Dämpfung der ersten Turmeigenfrequenz wird beispielsweise in dem Patent US 9,657,717 B2 beschrieben. Der Impulsdämpfer ist dabei in der obere Struktur des Turm untergebracht und umfasst ein eigenständiges Dämpfergehäuse, welches an eben dieser oberen Struktur befestigt ist. Das Dämpfergehäuse ist zylindrisch und mit einem flachen Boden versehen. Innerhalb des Dämpfergehäuses befindet sich eine scheibenförmige Dämpfermasse, die räumlich kleiner ist als das umgebende Gehäuse und auf dem Boden des Gehäuses über Rollen bewegbar ist. Die Dämpfungsscheiben stoßen bei Bewegung des Systems über Dämpfungselemente an der Innenseite des Dämpfungsgehäuse an und reduzieren so die Erregerschwingung. Dieses Dämpfersystem ist aber in der Praxis bei Verwendung als Errichtungsdämpfer aber insbesondere bei großen Anlagen nicht optimal effektiv, da nur mäßig starke Dämpfungen damit erreicht werden können.

Dokument WO2017144167 offenbart einen Schwingungsdämpfer für Windkraftanlage und wird als der nächstliegende Stand der Technik angesehen.

Es bestand somit die Aufgabe, einen Impuls-Schwingungsdämpfer bereitzustellen, welcher eine starken Dämpfungseffekt für große Schwingungsamplituden während der Montage oder Demontage eine hohen schlanken Struktur, z. B. einer Windkraftanlage, auszuüben vermag.

### Zusammenfassung der Erfindung:

Die erfindungsgemäße Tilgervorrichtung arbeitet dabei nach dem Prinzip der Anschlagdämpfung und ist zur Dämpfung insbesondere der ersten Eigenfrequenz eines zu dämpfenden Bauwerks/Turms, insbesondere einer Windkraftanlage geeignet, welche insbesondere auch am oberen Ende des hohen Bauwerks/Turms wirksam ist. Prinzipiell kann mit so einem Dämpfer auch die 2. Turmeigenfrequenz gedämpft werden.

Der hier vorgestellte Schwingungstilger zeichnet sich nicht nur durch seine Effektivität in Bezug auf Dämpfung der 1. oder 2. Eigenfrequenz und der damit verbundene Verminderung größerer Schwingungsamplituden aus, sondern auch durch seine große Mobilität und einfache Handhabung bei der Errichtung oder Demontage des hohen schlanken Bauwerks, insbesondere einer Windkraftanlage, mit fortschreitendem Aufbau oder Abbau des Turms, da dieser wegen seine Höhe von über 100 m im Falle von Windkraftanlagen aus verschiedenen einzelnen Segmenten aufgebaut ist, welche modular bei der Montage aneinander gefügt oder bei der oder auch der Demontage (Rückbau der Anlage) voneinander getrennt werden müssen, wodurch das gesamte Schwingungssystem sich permanent ändert und zu Problemen führen kann. Prinzipiell ist der erfindungsgemäße Impulsdämpfer auch für den Dauerbetrieb geeignet.

Gegenstand der Erfindung ist somit ein einfach zu montierender und demontierbarer Impulsdämpfer für eine hohe schlanke Struktur, insbesondere eine Windkraftanlage, insbesondere während der Errichtung oder des Rückbaus. Der erfindungsgemäße Impulsdämpfer vermeidet oder vermindert unkontrollierte Schwingungen, insbesondere große schädliche Schwingungsamplituden, welche insbesondere währende der Errichtung oder der Demontage des Bauwerks verstärkt auftreten und zu Schäden an der Anlage führen können. Der erfindungsgemäße Impulsdämpfer ist vorzugsweise wiederverwendbar und somit für mobile Anwendung bei Montage oder Demontage einer schwingungsanfälligen hohen schlanken Struktur, insbesondere einer Windkraftanlage vorgesehen, ist aber auch für den dauerhaften Einsatz geeignet sein.

Gegenstand der Erfindung ist somit insbesondere eine Impulsdämpfer-Vorrichtung zur Dämpfung von Schwingungen in einer Anlage, die insbesondere während der Errichtung oder der Demontage eines hohen schlanken, insbesondere aus einzelnen Segmenten aufgebauten Struktur, wie beispielsweise der Turm einer Windkraftanlage, auftreten, und folgende bauliche Elemente umfasst:
(i) eine feststehende Trägervorrichtung (2), die zwei oder mehr, vorzugsweise drei oder vier Trägerarme (2.2) aufweist, welche an einem Ende miteinander verbunden sind, und mit dem anderen freien Ende zueinander sternförmig nach außen weisen und dabei in einer horizontalen Ebene angeordnet sind,
(ii) eine ein oder mehrere Teile umfassende bewegbare Masse (3), welche oberhalb oder unterhalb oder zwischen den zwei oder mehr Trägerarmen (2.2) der horizontal ausgerichteten Trägervorrichtung (2) angeordnet und relativ zu dieser beweglich gelagert ist,
(iii) mindestens eine Gleit/Reib- oder Rollvorrichtung(4), die so angeordnet und gestaltet ist, dass eine relative Bewegung zwischen Trägervorrichtung (2) und der bewegbaren, schwingbaren Masse (3) ermöglicht wird, und
(iv) mindestens eine ein oder mehrere Anschlagelemente (7.1)(7.2) umfassende Anschlagvorrichtung (7), vorgesehen für das Anschlagen der bewegbaren Masse (3) an die feststehende Trägervorrichtung (2), wodurch bewirkt wird, dass durch Anschlagen der durch einwirkende Kräfte bewegten Masse an die feststehende Trägervorrichtung die aufgetretenen Schwingungen in der Anlage durch Impulsdämpfung vermindert oder eliminiert werden, wobei die Anschlagvorrichtung (7) so angeordnet ist, dass die bewegbare Masse (3) nicht um die Hochachse drehbar ist, wodurch ein Torsionsmoment um die Hochachse übertragen werden kann, und die Anschlagvorrichtung zudem in tangentialer Richtung in Bezug auf die Längsachse der schlanken Struktur funktionell wirksam ist. Die Anordnung der einzelnen erfindungsgemäßen Anschlagelemente (7.1)(7.2) ist vorzugsweise jeweils unidirektional und bewirkt dadurch, dass auftretende Kreisbewegungen der hohen schlanken Struktur bedämpft werden können.

In einer besonderen Ausführungsform der Erfindung bildet die ein oder mehrere Teile umfassende bewegbare Masse (3) einen geschlossenen Ring, welcher über die besagte Anschlagvorrichtung und besagte Gleit/Reib-/Rollvorrichtung mit den freien Enden der Trägerarme (2.2) der Trägervorrichtung (2) beweglich in Verbindung steht. Die Ringstruktur kann eine Masseneinheit sein; sie kann aber auch aus verschiedenen Ringsegmenten zusammengesetzt sein. Die Größe der Ringstruktur des Impulsdämpfers richtet sich dabei vorzugsweise nach der Größe, bzw. dem Durchmesser des hohen schlanken Bauwerks, bzw. Turms. Auch eine von der Ringform abweichende Masseneinheit ist prinzipiell denkbar.

Wie bereits anfangs erwähnt, basiert die Impulsdämpfung auf dem Anschlagen einer bewegbaren Masse an eine feststehende Struktur. Daher kommt der Anschlagkonstruktion eine besondere Bedeutung bei.

Gegenstand der Erfindung ist somit insbesondere ein entsprechender Impulsdämpfer bei dem die Anschlagvorrichtung (7) Anschlagelemente (7.1)(7.2) aufweist, die an den zwei, drei, vier, fünf oder sechs Trägerarmen (2.2) der sternförmigen Trägervorrichtung (2) und / oder an der bewegten Masse (3) angebracht sind, wobei die besagten Anschlagelemente vorzugsweise in tangentialer Richtung in Bezug auf die Längsachse der schlanken Struktur angebracht sind.

Die Anschlagelemente (7.1) der Anschlagvorrichtung (7) des erfindungsgemäßen Impulsdämpfers umfassen in einer ersten Ausführungsform rein elastische, bzw. elastisch-dämpfende Elemente, insbesondere elastische Schichtelemente aus Gummischichten (7.1.1) und Zwischenblechen (7.1.2). Dabei werden in der Regel zwei- bis fünfschichtige Elemente eingesetzt, welche vorzugsweise vertikal zur horizontalen Ebene der Trägervorrichtung ausgerichtet sind. Außer den besagten flachen Schichtelementen können auch entsprechende Konuselemente oder Buchsen aus Elastomer-Metallschichten verwenden.

Die Anschlagelemente (7.2) der Anschlagvorrichtung (7) des erfindungsgemäßen Impulsdämpfers umfassen in einer zweiten Ausführungsform elastisch/hydraulischdämpfende Elemente aus elastischen flachen Schichtelementen (7.2.0) oder elastischen Konus- oder Buchsenkörpern aus Gummischichten und Zwischenblechen, wie oben beschrieben, sowie Hydraulikelemente (7.2.1)(7.2.2)(7.2.3)(7.2.4), wie weiter unten genauer beschrieben. Mittels Hydraulik ist es nicht nur möglich, die Steifigkeit der elastischen Teile zu modifizieren sondern auch die Dämpfung über einen größeren Bereich zu verändern, als dies mit reinen elastischen Elementen möglich ist..

Die besagten Anschlagelemente (7.1)(7.2) der Anschlagvorrichtung (7) sind in einer weiteren Ausführungsform der Erfindung so angeordnet, dass ein erstes Anschlagelement ((7.1) oder (7.2)) an der bewegbaren Masse (3) und ein zweites Anschlagelement (7.1)(7.2) an dem gegenüberliegenden Teil des feststehenden Trägerelements (2)(2.2) angebracht ist, und diese Anschlagelemente im inaktiven Zustand des Dämpfers durch einen Bewegungsraum oder -Spalt voneinander getrennt sind.

Bei Bewegung der Masse (3) gleitet diese gemäß der erfindungsgemäßen Konstruktion an bestimmten Stellen, welche Kontakt mit der feststehenden Trägervorrichtung (2) haben, über die entsprechenden Stellen an den Trägerarme (2.2), vorzugsweise an deren nach außenstehenden Enden. Der Platzbedarf für diese Gleit-/Reibbewegung muss dabei ausreichend groß auf den Trägerarmen gewählt werden. Die Gleitelemente müssen dabei so angeordnet sein, dass sie möglichst optimal zu den Anschlagelementen positioniert sind, so dass ein Geiten (oder auch Rollen bei Rollelementen) der entsprechenden Teile der Masse (3) gegen die Anschläge (7) gewährleistet ist.

Gegenstand der Erfindung ist somit ein entsprechender Impulsdämpfer, bei dem die Gleit/Reib- oder Rollvorrichtung (4) entsprechende funktionelle Elemente (4.1)(4.2)(4.3) an bestimmten Positionen der bewegten Masse (3) und an den Trägerarmen (2.2) der Trägervorrichtung (2) aufweist. Dabei sollte der Reibungskoeffizient der Gleit/Reibvorrichtung (4) zwischen der Trägervorrichtung (2) und der bewegten Masse (3) einen Wert zwischen 0.04 bis 0.6, vorzugsweise zwischen 0.05 und 0.5 aufweisen.

Da sich bei starker Belastung der Reibbelag der Gleit./Reibvorrichtung abnutzt und eine Parallelführung der Elemente auf der Masse und dem Trägerarm dann nicht mehr gewährleistet ist, kann eine Ausgleichsvorrichtung (4.4) vorgesehen werden.

In einer weiteren Ausführungsform der Erfindung weist die Impulsdämpfer-Vorrichtung eine mechanische oder elektronische, manuelle oder ferngesteuerte Arretier-Vorrichtung (3.1) auf, mit deren Hilfe die bewegte Masse (3) gegenüber der Trägervorrichtung (2) festgestellt werden kann.

Die Trägervorrichtung (2) des erfindungsgemäßen Impulsdämpfers weist üblicherweise Befestigungselemente (2.1) auf, mit denen sie direkt oder über einen entsprechend gestalteten, im Falle eines Turms vorzugsweise ringförmigen Flansch (1) mit der schlanken Struktur, beziehungsweise, vorzugsweise mit dem jeweils obersten Segment dieser Struktur fest aber gegebenenfalls wieder lösbar verbunden ist. Dieser Flansch (1) wird bei Montage als erstes auf den Rand der Struktur montiert. Es folgt dann die Anbindung des eigentlich Impulsdämpfers über die Teile (2.1) und die fest zu montierende Trägervorrichtung (2) mit den Trägerarmen (2.2).

Wie bereits früher gesagt, ist der erfindungsgemäße Impulsdämpfer bestens zur Dämpfung von Schwingungen, beispielsweise in einer Windkraftanlage während der Errichtung oder der Demontage des Turms, der Gondel oder der Rotorblätter geeignet.

Gegenstand der Erfindung ist somit letztlich auch eine im Bau befindliche Windkraftanlage umfassend eine wieder verwendbare mobile Impulsdämpfer-Vorrichtung wie oben, folgend und in den Ansprüchen beschrieben, welche während der Montage oder Demontage der Windkraftanlage auf das jeweils oberste Segment des Turmes oder auf die Gondel montiert worden ist.

### Kurze Beschreibung der Abbildungen:

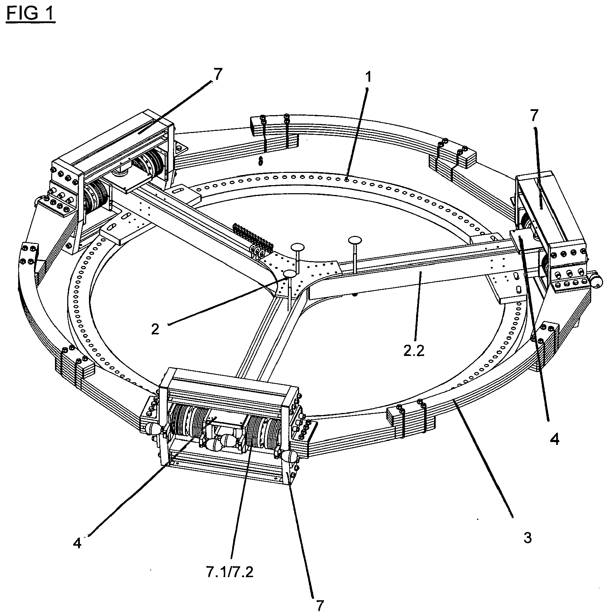

Fig. 1 zeigt eine perspektivische Sicht der erfindungsgemäßen Impulsdämpfer-Vorrichtung inklusive Anbindung an den Turm, bzw. eines Turmsegmentes einer Windkraftanlage: Jeder Trägerarm (2.2) der Vorrichtung weist auf der Oberseite an seinem freien Ende Gleitelemente auf, welche mit Gleitelementen an der Unterseite der ringförmigen bewegten Masse (3) funktionell in Verbindung stehen. Weiterhin weist die Vorrichtung gemäß Fig. 1 in diesem Bereich hydraulisch-elastomere Anschlagelemente (7)(7.2) auf, welche am Trägerarm und an der bewegbaren ringförmigen Masse (7) tangential angeordnet sind, und zwar in der Weise, dass die Masse nach beiden Seiten anschlagen kann. Der Abstand (5) zwischen den Anschlagpunkten bestimmt dabei die relative Bewegungsfreiheit über die Gleitelemente (4) und damit den Zeitpunkt und die Stärke der Dämpfung durch Anschlagen an die Anschlagelemente. Die Gleit- und Anschlagelemente sind so angeordnet, dass sie wenig Platz benötigen. Die Anschlagelemente umfassen vertikal angeordnete Elastomer-Metall-Schichtelemente (mit 2,3,4, 5, oder 6 Schichten), die sich bei Anschlag entlang ihrer vertikalen Achse verdichten können. Falls eine geringere Steifigkeit und Dämpfung gewünscht ist, können die besagten Schichtelemente auch so angeordnet werden, dass ihre vertikal Achse senkrecht zur der horizontalen Ebene der Trägervorrichtung angeordnet ist.

Die Trägervorrichtung (2) bzw. die sternförmige Anordnung der Trägerarme (2.2) ist in ihrem Zentrum mit geeigneten Beschlägen versehen, welche den Stern in der Mitte fixiert, bzw. zusammenhält. An jedem Trägerarm (2.2) ist auf Höhe, bzw. im Radius der hier runden Strukturwand eine Befestigung (2.1) für die Anbindung an den Turm, gegebenenfalls an einen Flansch (1) vorgesehen.

Der Impulsdämpfer ist auch mit rein elastischen Anschlagelementen (7.1) erfindungsgemäß vorgesehen. Dies entspricht der Ausführung nach Fig. 1, jedoch ohne hydraulische Unterstützung der elastomeren Schichtelemente.

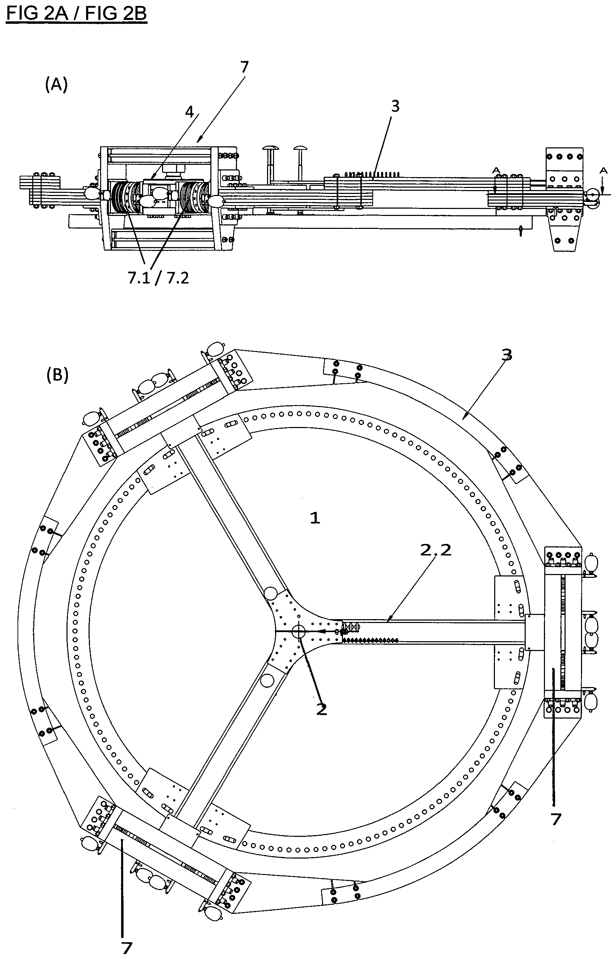

Fig. 2 zeigt eine Seiten- (A) und eine Draufsicht (B) des erfindungsgemäßen Impulsdämpfers gemäß Fig. 1 inklusive Turmflansch (1)

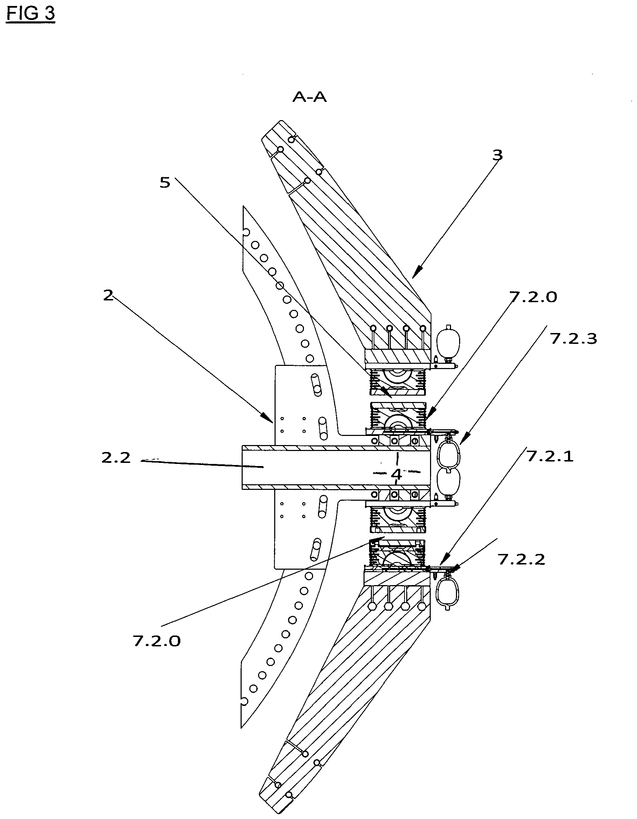

Fig. 3 zeigt einen Querschnitt / Ausschnitt des Impulsdämpfers aus Fig. 1 mit jeweils einem hydraulisch-elastomeren Anschlag (7.2) , befestigt an der bewegbaren Masse (3) und am Ende eines Trägerarms (2.2). Zwischen den beiden Elementen ist ein Bewegungspeilraum (5) bis zum Anschlag vorgesehen. Ein Trägerarm (2.2) weist auf beiden Seiten tangential jeweils ein solches Paar von Anschlagelementen (7.2) auf (beidseitiger Anschlag).

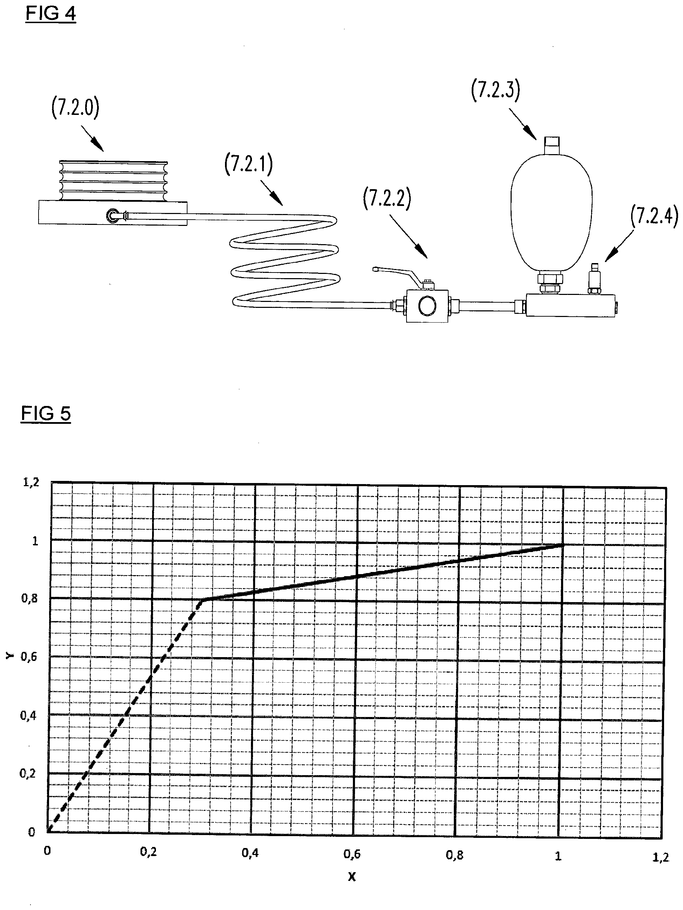

Fig. 4 zeigt eine Skizze der Anordnung der hydraulischen Komponenten des hydraulisch-elastomeren Anschlagelements (7.2). Dabei stellt das Element (7.2.0) das Gummi/Blech-Schichtelement dar, das zeichnerische Element (7.2.1) die längere hydraulische Leitung, das zeichnerische Element (7.2.2) die Regeldrossel, das zeichnerische Element (7.2.3) das Behältnis für das Hydraulikmedium (Flüssigkeit/Gas), und das zeichnerische Element (7.2.4) das Regelventil.

Fig. 5 zeigt ein charakteristisches Kraft-Weg-Diagramm des erfindungsgemäßen hydraulisch-elastomeren Anschlags (7.2). Auf der X-Achse ist der (normierte) Federweg, und auf der Y-Achse die normierte Kraft angegeben. Die gestrichelte steilere Linie gibt den Verlauf an, während der Membranspeicher (7.2.3) geschlossen ist. Nach Öffnen des Ventils (7.2.2) fließt nun Flüssigkeit in den Membranspeicher und man erhält eine flachere (durchgezogene) Verlaufslinie, die für eine erhöhte Dämpfung steht.

### Einzelheiten der Erfindung:

Im Folgenden wird exemplarisch ein erfindungsgemäßer Impulsdämpfer für eine Windkraftanlage näher beschrieben:
Der Impulsdämpfer weist beispielhaft folgende Merkmale auf:
(i) Eine stehende mit der Windkraftanlage, bzw. dem Turm oder einem Turmsegment verbundene Trägervorrichtung (2), welche mindestens zwei, vorzugsweise drei bis sechs, gleichlange Trägerarme (2.2) aufweist, die an einem Ende miteinander verbunden sind, und mit dem anderen freien Ende unter Einhaltung eines vorzugsweise identischen Winkels (3-armig: 120°; 4-armig: 90°; 5-armig: 72° und 6-armig: 60°) zueinander sternförmig, bzw. radial nach außen weisen und dabei in einer horizontalen Ebene angeordnet sind. Bei einem Impulsdämpfer mit nur zwei gegenüberliegenden Armen kann nur Dämpfung in einer Richtung erzielt werden, Ein solcher Impulsdämpfer hat aber den Vorteil, dass er nur wenig Platz benötigt..
(ii) einen bewegbare Masse (3) von im Wesentlichen ringförmiger Struktur, welche vorzugsweise oberhalb der horizontal ausgerichteten Trägervorrichtung (2) angeordnet ist und auf dieser beweglich lagert, vorzugsweise in äußeren Bereichen der Trägerarme (2.2)
(iii) eine Gleit-/Reibvorrichtung (4) zwischen besagter Trägervorrichtung (2) und der besagten bewegbaren Masse (7), und
(iv) eine Anschlagvorrichtung (7) mit einem oder mehreren Anschlagelementen (7.1)(7.2) für die bewegbare Masse (3) an die Trägervorrichtung (2).

Dabei liegt die bewegbare Masse (3) durch Vermittlung besagter Gleitvorrichtung so auf dem jeweils äußeren Bereich der radial nach außen weisenden Trägerarme (2.2) der Trägervorrichtung (2) auf, dass sie sich bei auf die Anlage einwirkenden Schwingungskräften relativ zu der stehenden Trägervorrichtung bis zu der besagten Anschlagvorrichtung zu bewegen vermag, wodurch beim Anschlagen der Masse die aufgetretenen Schwingungen in der Anlage durch Impulsdämpfung vermindert oder eliminiert werden.

Die Trägervorrichtung (2) weist Befestigungselemente (2.1), beispielsweise an der der Unterseite der Trägerarme (2.2), auf, mit denen sie direkt oder über einen ringförmigen Flansch (1)) mit der Windkraftanlage, beziehungsweise mit dem jeweils obersten Segment des zu errichtenden Turms einer Windkraftanlage fest aber gegebenenfalls wieder lösbar verbunden ist.

Die Gleitvorrichtung (4) umfasst Elemente (4).1)(4.2)(4.3), die mit der bewegbaren Masse (3) fest verbunden sind, vorzugsweise an deren Unterseite, und entsprechende Elemente welche mit der feststehenden Trägervorrichtung (2) verbunden sind, vorzugsweise auf der Oberseite der betreffenden Trägerarme (2.2).

In einer weiteren Ausführungsform der Erfindung weist die Gleitvorrichtung, entweder im Bereich der Gleitelemente and der Masse oder im Bereich der Gleitelemente an der Trägervorrichtung eine Ausgleichsvorrichtung (4.4) auf, welche eine Parallelführung der besagten Gleitelemente an den Trägerarmen (2.2) und an der bewegten Masse (3) bei Abnutzung der besagten Gleitelemente während des Betriebs gewährleistet.

Die Gleitelemente sind erfindungsgemäß so auszuwählen, dass der Reibungskoeffizient der betreffenden Elemente zwischen der Trägervorrichtung (2) und den Elementen der bewegten Masse (3) einen Wert zwischen 0 und 0.6, vorzugsweise zwischen 0.4 und 0.6 insbesondere zwischen 0.05 und 0.4 aufweist.

Die erfindungsgemäßen elastomeren oder hydraulisch-elastomeren Anschlagelemente (7.1)(7.2) sind mit der Trägervorrichtung (2), bzw. deren Trägerarme (2.2) als auch mit der ringförmigen Struktur der bewegten Masse (3), bzw. Massenteile verbunden. In einer bevorzugten Ausführungsform der Erfindung ist die Anschlagvorrichtung im äußeren Drittel der Trägerarme und der dort über die Gleitvorrichtung aufliegende bewegbare Masse (3) angeordnet. Da vorzugsweise jedes Anschlagelement in eine bevorzugte Richtung wirksam ist, sind die Anschlagelemente so auf der Trägerstruktur (2) angeordnet, dass sie funkktionell alle Richtungen in einem 360°-Winkel ausreichend abdecken.

In einer bevorzugten Ausführungsform der Erfindung sind besagte Anschlagelemente in tangentialer Richtung in Bezug auf die ringförmige Struktur der bewegten Masse (3) angebracht. Diese Anordnung ist besonders platzsparend. Generell kann aber auch die Anschlagvorrichtung so gestaltet und angeordnet sein, dass sie radiale Bewegungen blockiert.

Die Anschlagelemente können fest oder elastisch sein. Vorzugsweise umfassen sie jedoch entweder rein elastische Elemente (7.1), welche beispielsweise als an sich bekannte Schichtelemente aus elastischen Material und Blechen (7.1.0) ausgeführt sind, und vertikal oder horizontal, vorzugsweise vertikal, angeordnet sind. Durch entsprechende Auswahl des Elastomermaterials und der Schichtdicken kann auf die Steifigkeit und damit neben der eigentlichen Impulsdämpfung zusätzlich durch elastische Dämpfung auf die Gesamtdämpfungseigenschaften der Vorrichtung Einfluss genommen werden.

Die Anschlagelemente können aber auch elastische Elemente (7.2) umfassen, welche aus entsprechenden Schichtelementen (7.2.0) bestehen, die mit hydraulischen Einrichtungen (7.2.1)(7.2.2)(7.2.3)(7.2.4) versehen sind, wodurch die Steifigkeit des elastischen Materials als auch die Dämpfung des Systems modifiziert werden kann

In einer weiteren Ausführungsform der Erfindung weist der hier beschriebenen und beanspruchte Impulsdämpfer eine mechanische und/oder elektronische Arretier-Vorrichtung (3.1) auf, welche manuell steuerbar oder fernsteuerbar ist und verhindern soll, dass es bei bestimmten Betriebs-, Transport- oder Montagezuständen zu einer relativen Bewegung zwischen Trägervorrichtung und bewegter Masse (3) kommt.

Wird ein erfindungsgemäßer Impulsdämpfer mit Anschlägen ausgeführt, die ausschließlich aus Elastomer und Metall bestehen (7.1), ist die realisierbare Dämpfung durch das Elastomer festgelegt und kann über diese Grenze hinaus nicht weiter erhöht werden.

Bei bestimmten Anwendungen können auch höhere Dämpfungswerte erforderlich sein. Dafür kommt erfindungsgemäß ein hydraulisch-elastomeres Anschlagelement (7.2) zur Anwendung, wie im Folgenden genauer beschrieben (s. auch Abbildungen). Solch ein hydraulisch-elastisches System (7.2) besteht zum Beispiel aus einem elastomer-hydraulischen Element (7.2.0), das über einen Schlauch (7.2.1) und ggf. über eine Drossel (7.2.2) mit einem Membranspeicher (7.2.3) verbunden ist (Fig. 4). Letzterer ist mit einem Hydraulikmedium (Flüssigkeit/Gas) gefüllt ist. Solch ein hydraulisch-elastomerer Anschlag kann auf dem stehenden Trägerteil (2) oder auf dem bewegten Massenteil (3) oder auf beiden Bauteilen installiert sein.

In einer weiteren Ausführungsform wird ein solcher hydraulisch-elastomerer Anschlag (7.2) mit einem rein elastomeren Anschlag (7.1) kombiniert, wobei der Anschlag (7.1) auf dem feststehenden Trägerteil angebracht ist und der Anschlag (7.2) auf dem bewegbaren Massenteilen (3), oder umgekehrt.

Denkbar ist auch ein System bei dem auf dem stehenden oder bewegten Teil ein erfindungsgemäßer hydraulisch-elastomerer Anschlag verbaut ist, und auf der jeweiligen Gegenseite ein übliches Dämpfungs-/Federelement eingebaut ist.

Kommt es zum Anschlagen zwischen stehendem Trägerteil (2) und bewegten Massenteil (3), wird die Flüssigkeit aus den elastomer-hydraulischen Elementen (7.2.0) verdrängt und der Druck im restlichen Hydrauliksystem (7.2.1), (7.2.2), (7.2.3) und (7.2.4) steigt an. Übersteigt dieser Druck den voreingestellten Gasdruck im gasgefüllten Membranspeicher (7.2.3) öffnet das Ventil (7.2.4) des Membranspeichers (7.2.3) und die Hydraulikflüssigkeit kann aus (7.2.0) zurück in den Membranspeicher fließen. Da die Flüssigkeit viskositätsbehaftet ist, wird bei dem Fließen der Flüssigkeit Energie dissipiert, was zu einer Dämpferkraft zwischen dem hydraulischen Anschlag und der Impulsmasse führt. Sinkt der Druck wieder, weil die Impulsmasse abgebremst ist und sich wieder aus dem Anschlag herausbewegt, verlässt die Flüssigkeit den Membranspeicher (7.2.3). Ab einem gewissen Druck schließt das Ventil des Membranspeichers schließt und die Flüssigkeit fließt durch die Drossel (7.2.2) und/oder den Schlauch (7.2.1) wieder zurück in das elastomer-hydraulische Element (7.2.0). Auch beim Zurückfließen der Flüssigkeit wird Energie dissipiert. Das charakteristische Kraft-Weg-Verhalten zu diesem Element ist in Fig. 6 dargestellt.

Findet kein Anschlag statt, so kann im dem elastomer-hydraulisches Element (7.2.0) nur ein geringer Vordruck eingestellt werden. Aufgrund des niedrigen Drucks im hydraulischen System besteht die Gefahr, dass es - bei einem Anschlag - in der Drossel (7.2.2) zu Kavitation kommt und so der Anschlag seine Funktion nicht erfüllen kann. Verwendet man daher statt der Drossel oder zusätzlich zu dieser einen langen Schlauch (7.2.1) als Energie dissipierenden Widerstand, wird die Gefahr der Kavitation reduziert. Kavitation tritt vor allem dort auf, wo durch starke Querschnittsveränderung die Geschwindigkeit der Flüssigkeit ansteigt und damit lokal der Druck unter den Dampfdruck der Flüssigkeit sinkt. In diesen Stellen kann es Gasbildung kommen und die Funktion des Anschlags ist nicht mehr gegeben. Das Ausgasen von im Wasser gelösten Gasen verschärft diese Situation. Durch die Verwendung eines langen Schlauchs, wird Dämpfung erzeugt, ohne dass es in der Flüssigkeit zu Gasbildung kommt.

Durch die Auswahl von geeigneten Ventilschaltungen können auch andere Kennlinie erzeugt werden. Dies hängt sehr stark von der Anwendung ab.

So können z.B. handelsübliche mit Ventilen geschaltete Hydraulikdämpfer verwendet werden, bei denen die gewünschten Kennlinien eingestellt werden können. Diese Dämpfer haben allerdings den Nachteil, dass Sie nur in einer Richtung Lasten aufnehmen können. Das erfindungsgemäße elastomer-hydraulische System (7.2) mit dem elastomer-hydraulischen Element (7.2.0) kann auch radiale Lasten aufnehmen.

Die bewegte Masse (3) wird erfindungsgemäß ggf. über entsprechende Führungen vertikal von oben auf den Trägerarmen (2.2) gleitend gelagert.. Es ist jedoch auch möglich entsprechende Rollelemente einzusetzen.

Bei einer dreiarmigen Trägervorrichtung sind so mindestens drei Gleitvorrichtungen (4) notwendig. Die Gleitelemente (4.1)(4.2)(4.3)(4.4)(4.5)(4.6) müssen in diesem Fall möglichst 120° zueinander angeordnet sein. Es reicht aus, pro Trägerarm eine Gleitvorrichtung bereitzustellen. Es können aber auch auf jedem Arm zwei oder mehr Gleiteinheiten zwischen bewegter Masse (3) und dem jeweiligen Trägerarm vorliegen.

Ein erfindungsgemäße Gleitvorrichtung (4) setzt sich auf Seiten der bewegten Masse (3) beispielsweise aus einer Gleitplatte (4.3) und gegebenenfalls einem Ausgleichelement (4.4) zusammen, die über die Lagerplatte (4.2) an der bewegten Masse (3) befestigt sind. Das Ausgleichselement (4.4) ist nicht unbedingt notwendig, hilft aber, eventuelle Abweichungen der Parallelität zwischen bewegter Masse (3) und stehendem Teil (2) auszugleichen. Das Ausgleichselement soll also sicherstellen, dass die beiden aufeinander gleitenden Bauteile (Masse, Trägervorrichtung) stets horizontal angeordnet bleiben, auch wenn durch die erzeugte Reibung die Gleitschichten unregelmäßig abgenutzt werden.

Der an der Trägervorrichtung (2) befestigte stehende Gegenpart der erfindungsgemäßen Gleitvorrichtung ist das Gleitblech/Reibblech (4.1), das ggf. über eine weitere Zwischen- oder Reibplatte (4.5) und einer Anbindungsplatte (4.6) an dem Stern (2), bzw. dessen Trägerarme (2.2) befestigt sind.

Die vertikale Gewichtskraft und andere Beschleunigungskräfte werden über das Gleitelement in den Stern (2.2), in die Turmanbindung (2.4), in den Turmflansch (2.1) und schließlich in den Turm (nicht dargestellt) eingeleitet.

Gleitblech (4.1) und Gleitplatte (4.3) bewegen sich relativ zueinander in der horizontalen Ebene. Eine vertikale Relativbewegung stellt sich nicht ein.

Die Reibung zwischen Gleitplatte (4.3) und Gleitblech (4.1) wird durch die Auflagerlast und den Reibungskoeffizient bestimmt. Die Wahl des Gleitmaterials der Gleitplatte (4.3.), bzw. der Reibplatte (4.5) entscheidet über den Reibungskoeffizient.

Für die hier gewünschte Anwendung bei einer Windkraftanlage sind Reibungskoeffizienten im Bereich 0,05 und 0,6 möglich. Wählt man einen Reibungskoeffizienten von 0,05 beginnt die Relativbewegung zwischen Masse (3) und Struktur bei 0,5 m/s² Beschleunigung der Struktur (z.B. des Turms). Bei einem Reibungskoeffizienten von 0,4 erfolgt erst bei 3,9 m/s² Strukturbeschleunigung eine Bewegung der Masse (3). Der Reibungskoeffizient muss je nach Anlage und Betriebsart gewählt werden. Soll der Tilger erst bei großen Amplituden arbeiten, kann ein großer Reibungskoeffizient gewählt werden. Eine bessere Wirkung des erfindungsgemäßen Impuls-Tilgers wird mit kleineren Reibungskoeffizienten erzielt, vorzugsweise zwischen 0.05 und 0.1.

Die Relativbewegung der bewegten Masse (3) zum stehenden Teil (2) wird erfindungsgemäß durch die besagten Anschlagelemente (7.1) oder (7.2) begrenzt, die vorzugsweise in tangentialer Richtung angeordnet sind. Die Anschlagelemente wirken hierbei nur unidirektional und in die tangentiale Richtung.

Die Anschlagelemente (7)(7.1)(7.2) sollten immer so angeordnet sein, dass auf beiden Seiten eines Sternarms ein bzw. zwei Anschlagelemente vorhanden sind, damit die bewegte Masse (3) in beiden Richtungen anschlagen kann.

Die Wahl der Gummigeometrie, Steifigkeit und Dämpfung entscheidet über die Wirksamkeit des Systems. Ebenso ist wichtig der Abstand der Anschlagelemente zu jeweiligen Gegenseite. Dieser Abstand wird freier Weg genannt. Kommt es zu einem Anschlagen, federn die Gummielemente ein und verzögern die bewegte Masse (3) so, dass sie nach einem gewissen Federweg zum Stehen kommt. Beim Anschlagen sind immer mindestens zwei Anschlagelemente im Einsatz.

Beim Anschlagen wird einerseits durch die Dämpfung des Gummis Energie dissipiert und anderseits durch die Elastizität des Gummis Energie gespeichert. Die gespeicherte Energie führt dazu, dass die bewegte Masse (3) wieder aus dem Anschlag herausbeschleunigt wird. Ist die Gummisteifigkeit- und Dämpfung sowie der verfügbare Weg, die bewegte Masse (3) und der Reibungskoeffizient auf die Struktur (Turm, hohes schlankes Bauwerk, Windkraftanlage) abgestimmt, können die Erregerschwingungen reduziert werden.

Möchte man eine Wirkung des erfindungsgemäßen Impulstilger-Systems in horizontaler Ebene erzielen, sollten vorzugsweise mindestens drei Paare unidirektionaler Anschlagelemente in etwa 120° zueinander angeordnet sein, wie das in Fig. 1 / Fig 2 gezeigt ist. Die Zylinderachsen der Anschlagelemente (7)(7.1)(7.2) können prinzipiell radial oder tangential zur sternförmigen Trägervorrichtung (2)(2.2) ausgerichtet sein. Wichtig ist, dass durch die Anschlagelemente beide horizontalen Richtungen gleichzeitig abgedeckt werden können.

Die tangentiale Ausrichtung der unidirektionalen Anschlagelemente hat im Vergleich zu radialen Ausrichtung den Vorteil, dass ein kleinerer Bauraum notwendig ist. Bei der tangentialen Anordnung können die Anschlagelemente leicht auf dem gleichen Durchmesser wie die Masse angeordnet werden. Somit ragen Sie nicht nach Innen oder Außen über die Masse hinaus. Die gewählte Anordnung von unidirektionalen Anschlagelemente führt außerdem dazu, dass auch Kreisbewegungen des Turms bedämpft werden können. Bei anderen bekannten Lösungen des Standes der Technik liegt bei Kreisbewegungen der bewegten Struktur die Tilgermasse ständig im Anschlag an und hat damit nur eine sehr kleine Wirkung. Nur die erfindungsgemäße Anordnung, wie in Fig. 1 oder Fig. 2 zu sehen, bewirkt bei einer kreisenden Bewegung der Struktur (z.B. Turm einer Windkraftanlage bei Wind) immer wieder Anschlagsereignisse, die zu einer Dämpfung des der Struktur führen. Die Wirkung bei Kreisbewegungen liegt dabei nicht unbedingt an der tangentialen Anordnung sondern daran, dass die Anschlagelemente erfindungsgemäß nicht zentral angeordnet sind, und dass zwischen den verschiedenen Paaren von Anschlagvorrichtungen (7) ein Abstand ist. Bei einem durchgehenden Ring von außen angeordneten Anschlagelementen könnte die Kreisbewegung der Struktur nicht so gut bedämpft werden

Wie bereits erwähnt besitzt der erfindungsgemäße Impulsdämpfer in der Praxis zumeist eine Arretierung, die verhindern soll, dass sich die Masse bewegt, wenn dies in bestimmten Situationen nicht erwünscht ist. Die Arretierung (3.1) der bewegten Masse (3) kann beispielsweise ein oder mehrere Hubgetrieben mit Motor umfassen, die mit entsprechen Klemmvorrichtungen (z.B. Haken), welche radial aus- und eingefahren werden können, ausgestattet sind. Die Haken sind hierbei in dem I-Trägern integriert und gelagert. Die Haken sind an Ihrer Innenseite mit Anschlagelementen oder Gummirollen ausgestattet um die bewegte Masse (3) während des Arretierungsprozesses nicht zu beschädigen. Soll die bewegte Masse (3) arretiert werden, werden die Haken eingefahren und die Haken verhindern jegliche Relativbewegung der bewegten Masse (3) zu stehenden Trägervorrichtung (2). Das Arretierungssystem kann ferngesteuert elektrisch, elektrisch mit Steuerung vor Ort oder per Handbetrieb verfahren werden. Die Elektromotoren sind mit einer Bremse ausgestattet um ungewollte Verschiebungen der Haken zu verhindern. Gleichzeitig sind die Hubgetriebe selbsthemmend ausgeführt, sodass eine Verschiebung der Haken nur von der Motorseite des Hubgetriebes aus möglich ist. Kräfte aus Richtung des Hakens führen wegen des Selbsthemmung zu keiner Verschiebung des Hakens.

Die Haken können auch Seile sein, die von der Hubgetriebe/Motor- Einheit gezogen werden. Die Seile können zwar nur Zugkräfte übertragen, Druckkräfte sind aber für die Anwendung des Arretierens nicht notwendig. Die drei Seile können auch über eine zentrale Rollen- und Antriebseinheit eingeholt bzw. entspannt werden.

## Patentansprüche

1. Impulsdämpfer-Vorrichtung zur Dämpfung von Schwingungen in einer Anlage, die insbesondere während der Errichtung oder der Demontage einer hohen schlanken, insbesondere aus einzelnen Segmenten aufgebauten Struktur, auftreten, umfassend
(i) eine feststehende Trägervorrichtung (2), die zwei oder mehr Trägerarme (2.2) aufweist, welche an einem Ende miteinander verbunden sind, und mit dem anderen freien Ende zueinander sternförmig nach außen weisen und dabei in einer horizontalen Ebene angeordnet sind,
(ii) eine ein oder mehrere Teile umfassende bewegbare Masse (3), welche oberhalb oder unterhalb oder zwischen den zwei oder mehr Trägerarmen (2.2) der horizontal ausgerichteten Trägervorrichtung (2) angeordnet und relativ zu dieser beweglich gelagert ist, **dadurch gekennzeichnet, dass**
(iii) mindestens eine Gleit/Reib- oder Rollvorrichtung(4) die so angeordnet und gestaltet ist, dass eine relative Bewegung zwischen Trägervorrichtung (2) und der bewegbaren Masse (3) ermöglicht wird, und
(iv) mindestens eine Anschlagvorrichtung (7), vorgesehen für das Anschlagen der bewegbaren Masse (3) an die feststehende Trägervorrichtung (2) welche bewirkt, dass durch Anschlagen der durch einwirkende Kräfte bewegten Masse an die feststehende Trägervorrichtung die aufgetretenen Schwingungen in der Anlage durch Impulsdämpfung vermindert oder eliminiert werden, wobei die Anschlagvorrichtung (7) so angeordnet ist, dass (a) die Masse (3) nicht um die Hochachse des Impulsdämpfers drehbar ist, wodurch ein Torsionsmoment um die Hochachse übertragen werden kann, und (b) sie funktionell in tangentialer Richtung relativ zur Längsachse der schlanken Struktur wirksam ist.

2. Impulsdämpfer-Vorrichtung nach Anspruch 1, **dadurch gekennzeichnet, dass** die ein oder mehrere Teile umfassende bewegbare Masse (3) einen geschlossenen Ring bilden, welcher über die besagte Anschlagvorrichtung und besagte Gleit/Reib-/Rollvorrichtung mit den freien Enden der Trägerarme (2.2) der Trägervorrichtung (2) beweglich in Verbindung steht.

3. Impulsdämpfer-Vorrichtung nach Anspruch 1 oder 2, **dadurch gekennzeichnet, dass** die Masse (3) über die besagte Gleit/Reib-/Rollvorrichtung (4) im jeweils äußeren Bereich der radial nach außen weisenden Trägerarme (2.2) der Trägervorrichtung (2) bewegbar ist.

4. Impulsdämpfer-Vorrichtung nach einem der Ansprüche 1 - 3, **dadurch gekennzeichnet, dass** eine erste Gleit/Reib- oder Rollvorrichtung (4) an der bewegten Masse (3) und eine zweite Gleit/Reib- oder Rollvorrichtung (4) an einen oder mehreren Trägerarmen (2.2) der Trägervorrichtung (2) angebracht ist.

5. Impulsdämpfer-Vorrichtung nach Anspruch 4 , **dadurch gekennzeichnet, dass** die Gleit/Reib- Rollvorrichtung (4) eine Ausgleichsvorrichtung (4.4) umfasst, welche eine Parallelführung der Elemente (4.1)(4.2)(4.3) der Gleit/Reib- oder Rollvorrichtung (4) an der bewegten Masse (3) und an den Trägerarmen (2.2) bei Abnutzung der besagten Elemente während des Betriebs gewährleistet.

6. Impulsdämpfer-Vorrichtung nach einem der Ansprüche 1 - 5, **dadurch gekennzeichnet, dass** der Reibungskoeffizient der Gleit/Reibvorrichtung (4) zwischen der Trägervorrichtung (2) und der bewegten Masse (3) einen Wert zwischen 0.05 bis 0.6aufweist.

7. Impulsdämpfer-Vorrichtung nach einem der Ansprüche 1 - 6 **dadurch gekennzeichnet, dass** die Anschlagvorrichtung (7) Anschlagelemente (7.1)(7.2) aufweist, die an den Trägerarmen (2.2) der Trägervorrichtung (2) und / oder an der bewegten Masse (3) angebracht sind.

8. Impulsdämpfer-Vorrichtung nach Anspruch 7, **dadurch gekennzeichnet, dass** die besagten Anschlagelemente (7.1)(7.2) der Anschlagvorrichtung (7) in tangentialer Richtung in Bezug auf die Längsachse der schlanken Struktur angeordnet sind, wobei jeweils ein erstes Anschlagelement an der bewegbaren Masse (3) und ein zweites Anschlagelement an dem gegenüberliegenden Teil des feststehenden Trägerelements (2)(2.2) angebracht ist, und diese Anschlagelemente durch einen Bewegungsraum (5) voneinander getrennt sind, der mit eintretender Impulsdämpfung geschlossen wird.

9. Impulsdämpfer-Vorrichtung nach Anspruch 7 oder 8, **dadurch gekennzeichnet, dass** die Anschlagelemente (7.1)(7.2) der Anschlagvorrichtung (7) elastisch-dämpfende Elemente oder elastisch/hydraulisch-dämpfende Elemente umfassen.

10. Impulsdämpfer-Vorrichtung nach einem der Ansprüche 1 - 9, **dadurch gekennzeichnet, dass** sie eine mechanische oder elektronische, manuelle oder ferngesteuerte Arretier-Vorrichtung (3.1) für die bewegte Masse (3) gegenüber der Trägervorrichtung (2) oder der Struktur umfasst.

11. Impulsdämpfer-Vorrichtung nach einem der Ansprüche 1 - 10, **dadurch gekennzeichnet, dass** die Trägervorrichtung (2) Befestigungselemente (2.1) aufweist, mit denen sie direkt oder über einen entsprechend gestalteten Flansch (1) mit der schlanken Struktur, beziehungsweise mit dem jeweils obersten Segment dieser Struktur fest aber gegebenenfalls wieder lösbar verbunden ist.

12. Impulsdämpfer-Vorrichtung nach einem der Ansprüche 1 - 11, **dadurch gekennzeichnet, dass** sie wiederverwendbar ist.

13. Verwendung eines Impulsdämpfers gemäß einem der Ansprüche 1 - 12 zur Dämpfung von Schwingungen in einer Windkraftanlage während der Errichtung oder der Demontage des Turms, der Gondel oder der Rotorblätter.

14. Verwendung eines Impulsdämpfers gemäß einem der Ansprüche 1 - 12 zur Dämpfung von Schwingungen, die durch von äußeren Kräften initiierte Kreisbewegungen der hohen schlanken Struktur verursacht werden.

15. im Bau befindliche Windkraftanlage umfassend eine Impulsdämpfer-Vorrichtung gemäß Anspruch 12, welche während der Montage oder Demontage der Windkraftanlage auf das jeweils oberste Segment des Turmes oder auf die Gondel montiert ist.

## Claims

1. Impulse damper device for damping vibrations in an installation, which vibrations occur in particular during the construction or disassembly of a tall, slim structure, in particular made up of individual segments, said device comprising
(i) a fixed support device (2) having two or more support arms (2.2) that are interconnected at one end, point outwards in a star shape with respect to one another with the other free end, and are arranged in a horizontal plane,
(ii) a movable mass (3) comprising one or more parts is arranged above or below or between the two or more support arms (2.2) of the horizontally oriented support device (2), and is mounted movably relative to said support device,
**characterized in that**
(iii) at least one sliding/friction or rolling device (4) which is arranged and designed to allow relative movement between the support device (2) and the movable mass (3), and
(iv) at least one stop device (7), provided for the movable mass (3) hitting the fixed support device (2), thereby causing the vibrations that have occurred in the installation to be reduced or eliminated by means of impulse damping by the mass moved by applied forces hitting the fixed support device, wherein the stop device (7) is arranged such that (a) the mass (3) cannot be rotated about the vertical axis of the impulse damper, as a result of which a torsional moment about the vertical axis can be transmitted, and (b) said stop device is functionally effective in a tangential direction relative to the longitudinal axis of the slim structure.

2. Impulse damper device according to claim 1, **characterized in that** the movable mass (3) comprising one or more parts form a closed ring which is movably connected, via said stop device and said slide/friction/rolling device, to the free ends of the support arms (2.2) of the support device (2).

3. Impulse damper device according to either claim 1 or claim 2, **characterized in that** the mass (3) can be moved via said sliding/friction/rolling device (4) in the respective outer region of the radially outwardly pointing support arms (2.2) of the support device (2).

4. Impulse damper device according to any of claims 1-3, **characterized in that** a first sliding/friction or rolling device (4) is attached to the moving mass (3) and a second sliding/friction or rolling device (4) is attached to one or more support arms (2.2) of the support device (2).

5. Impulse damper device according to claim 4, **characterized in that** the sliding/friction rolling device (4) comprises a compensating device (4.4) which ensures parallel guidance of the elements (4.1) (4.2) (4.3) of the sliding/friction or rolling device (4) on the moving mass (3) and on the support arms (2.2) in the event of wear of said elements during operation.

6. Impulse damper device according to any of claims 1-5, **characterized in that** the coefficient of friction of the sliding/friction device (4) between the support device (2) and the moving mass (3) has a value between 0.05 and 0.6.

7. Impulse damper device according to any of claims 1-6, **characterized in that** the stop device (7) has stop elements (7.1) (7.2) which are attached to the support arms (2.2) of the support device (2) and/or to the moving mass (3).

8. Impulse damper device according to claim 7, **characterized in that** said stop elements (7.1) (7.2) of the stop device (7) are arranged in a tangential direction with respect to the longitudinal axis of the slim structure, in each case a first stop element being attached to the movable mass (3) and a second stop element being attached to the opposite part of the fixed support element (2) (2.2), and these stop elements being separated from one another by a movement space (5) which is closed when the impulse damping occurs.

9. Impulse damper device according to either claim 7 or claim 8, **characterized in that** the stop elements (7.1) (7.2) of the stop device (7) comprise resiliently damping elements or resiliently/hydraulically damping elements.

10. Impulse damper device according to any of claims 1-9, **characterized in that** it comprises a mechanical or electronic, manual or remote-controlled device (3.1) for locking the moving mass (3) with respect to the support device (2) or the structure.

11. Impulse damper device according to any of claims 1-10, **characterized in that** the support device (2) has fastening elements (2.1) by means of which it can be securely but optionally re-releasably connected, directly or via a correspondingly designed flange (1), to the slim structure or to the respective uppermost segment of this structure.

12. Impulse damper device according to any of claims 1-11, **characterized in that** it is reusable.

13. Use of an impulse damper according to any of claims 1-12 for damping vibrations in a wind turbine during the construction or disassembly of the tower, the nacelle or the rotor blades.

14. Use of an impulse damper according to any of claims 1-12 for damping vibrations which are caused by circular movements of the tall, slim structure initiated by external forces.

15. Under-construction wind turbine comprising an impulse damper device according to claim 12, which is mounted on the respective uppermost segment of the tower or on the nacelle during the assembly or disassembly of the wind turbine.

## Revendications

1. Dispositif amortisseur d'impulsions pour amortir les vibrations dans une installation, qui se produisent notamment lors du montage ou du démontage d'une structure élancée élevée constituée notamment de segments individuels, comprenant
(i) un dispositif de support fixe (2) qui présente deux bras de support (2.2) ou plus, qui sont reliés l'un à l'autre à une extrémité et pointent vers l'extérieur en forme d'étoile avec l'autre extrémité libre et sont disposés dans un plan horizontal,
(ii) une masse mobile (3) comprenant une ou plusieurs parties, qui est agencée au-dessus ou au-dessous ou entre les deux bras de support (2.2) ou plus du dispositif de support (2) aligné horizontalement, et qui est montée de manière mobile par rapport à celui-ci, caractérisé en ce
(iii) au moins un dispositif de glissement/frottement ou de roulement (4) agencé et conformé pour permettre un mouvement relatif entre le dispositif de support (2) et la masse mobile (3), et
(iv) au moins un dispositif de butée (7), prévu pour la butée de la masse mobile (3) contre le dispositif de support fixe (2), qui provoque la réduction ou l'élimination des vibrations qui se sont produites dans l'installation par amortissement des impulsions par la butée de la masse déplacée par les forces agissantes contre le dispositif de support fixe, dans lequel le dispositif de butée (7) est agencé de sorte que (a) la masse (3) ne peut pas tourner autour de l'axe vertical de l'amortisseur d'impulsions, afin qu'un moment de torsion puisse être transmis autour de l'axe vertical, et (b) qu'elle est fonctionnelle dans la direction tangentielle par rapport à l'axe longitudinal de la structure élancée.

2. Dispositif amortisseur d'impulsions selon la revendication 1, **caractérisé en ce que** la masse mobile (3) comprenant une ou plusieurs pièces forme un anneau fermé, lequel est relié de manière mobile aux extrémités libres des bras de support (2.2) du dispositif de support (2) via ledit dispositif de butée et ledit dispositif de glissement/frottement/roulement.

3. Dispositif amortisseur d'impulsions selon la revendication 1 ou 2, **caractérisé en ce que** la masse (3) est mobile dans la zone extérieure respective des bras de support (2.2) orientés radialement vers l'extérieur du dispositif de support (2) sur ledit dispositif de glissement/frottement/roulement (4).

4. Dispositif amortisseur d'impulsions selon l'une quelconque des revendications 1 à 3, **caractérisé en ce qu'**un premier dispositif de glissement/frottement ou de roulement (4) est fixé sur la masse mobile (3) et un second dispositif de glissement/frottement ou de roulement (4) est fixé à un ou à plusieurs bras de support (2.2) du dispositif de support (2).

5. Dispositif amortisseur d'impulsions selon la revendication 4, **caractérisé en ce que** le dispositif de glissement/frottement ou de roulement (4) comprend un dispositif de compensation (4.4) qui garantit un guidage parallèle des éléments (4.1) (4.2) (4.3) du dispositif de glissement/frottement ou de roulement (4) sur la masse mobile (3) et sur les bras de support (2.2) en cas d'usure desdits éléments pendant le fonctionnement.

6. Dispositif amortisseur d'impulsions selon l'une quelconque des revendications 1 à 5, **caractérisé en ce que** le coefficient de frottement du dispositif de glissement/frottement (4) entre le dispositif de support (2) et la masse mobile (3) présente une valeur comprise entre 0,05 et 0,6.

7. Dispositif amortisseur d'impulsions selon l'une des revendications 1 à 6, **caractérisé en ce que** le dispositif de butée (7) présente des éléments de butée (7.1) (7.2) fixés sur les bras de support (2.2) du dispositif de support (2) et/ou sur la masse mobile (3).

8. Dispositif d'amortissement d'impulsions selon la revendication 7, **caractérisé en ce que** lesdits éléments de butée (7.1)(7.2) du dispositif de butée (7) sont disposés dans la direction tangentielle par rapport à l'axe longitudinal de la structure élancée, dans lequel, respectivement, un premier élément de butée est fixé sur la masse mobile (3) et un second élément de butée est fixé sur la partie opposée de l'élément de support fixe (2)(2.2), et ces éléments de butée sont séparés les uns des autres par un espace de mouvement (5) qui est fermé en cas d'amortissement des impulsions.

9. Dispositif amortisseur d'impulsions selon la revendication 7 ou 8, **caractérisé en ce que** les éléments de butée (7.1) (7.2) du dispositif de butée (7) comprennent des éléments élastiquement amortisseurs ou des éléments élastiquement/hydrauliquement amortisseurs.

10. Dispositif amortisseur d'impulsions selon l'une quelconque des revendications 1 à 9, **caractérisé en ce qu'**il comprend un dispositif de verrouillage mécanique ou électronique, manuel ou télécommandé (3.1) pour la masse mobile (3) par rapport au dispositif de support (2) ou à la structure.

11. Dispositif amortisseur d'impulsions selon l'une des revendications 1 à 10, **caractérisé en ce que** le dispositif de support (2) présente des éléments de fixation (2.1) avec lesquels il peut être relié directement ou via une bride (1) de conception correspondante à la structure élancée, ou est relié fermement mais éventuellement de manière amovible au segment supérieur respectif de cette structure.

12. Dispositif amortisseur d'impulsions selon l'une quelconque des revendications 1 à 11, **caractérisé en ce qu'**il est réutilisable.

13. Utilisation d'un amortisseur d'impulsions selon l'une quelconque des revendications 1 à 12 pour amortir les vibrations dans une éolienne lors du montage ou du démontage de la tour, de la nacelle ou des pales du rotor.

14. Utilisation d'un amortisseur d'impulsions selon l'une quelconque des revendications 1 à 12 pour amortir les vibrations provoquées par des forces externes initiées par des mouvements circulaires de la structure élancée élevée.

15. Éolienne en cours de construction, comprenant un dispositif d'amortissement d'impulsions selon la revendication 12, qui est monté sur le segment supérieur respectif de la tour ou sur la nacelle lors du montage ou du démontage de l'éolienne.
